# FASCICULE DE BREVET EUROPEEN

(11) **EP 1 927 525 B1**
(45) Date de publication et mention de la délivrance du brevet: **02.03.2011**
(21) Numéro de dépôt: 07301598.4
(22) Date de dépôt: 29.11.2007
(51) Int. Cl.: B62B 5/00, B65G 7/04

(54) **Chariot présentoir de pièces pour l'approvisionnement de lignes de fabrication**
Zuführschlitten für Werkstücke zu Produktionslinien
Mobile part supply unit for supplying production lines

(30) Priorité: 30.11.2006 FR 0655239
(43) Date de publication de la demande: 04.06.2008
(73) Titulaire: PEUGEOT CITROËN AUTOMOBILES SA, 78140 Velizy-Villacoublay (FR)
(72) Inventeur: Jeannenez, Christophe, 68390 Sausheim (FR); Garbacz, Jérôme, 68100 Mulhouse (FR); Triolet, François, 68580 Ueberstrass (FR); Muller, Jean Paul, 68270 Ruelisheim (FR); Litzler, Sophie, 68640 Feldsbach (FR)

(56) Documents cités:
- EP-A1- 1 568 581
- AT-U1- 6 035
- DE-U1-202004 010 854
- FR-A- 2 661 881
- US-A- 6 000 486

## Description

La présente invention est relative à un chariot pour le déplacement et la présentation de pièces diverses, en particulier quoique de façon non exclusive sur une ligne de fabrication, notamment de montage de véhicules automobiles, en vue de satisfaire à des contraintes logistiques d'approvisionnement de celle-ci et en particulier d'amener à proximité d'un poste de travail quelconque les pièces ou accessoires qui doivent y être utilisés.

Les chariots transporteurs des pièces indispensables à l'alimentation des postes d'une ligne de montage, exigent de pouvoir être aisément manoeuvrables et déplaçables afin qu'ils puissent être positionnés en des endroits précis, par un opérateur qui tire ou pousse ce chariot en vue de le déplacer de façon optimale pour l'amener dans la position requise.

De tels chariots, en particulier ceux qui sont munis de moyens élévateurs pour soulever certaines pièces de poids important, sont bien connus dans la technique mais nécessitent, pour leur positionnement final, une ou plusieurs interventions manuelles en vue d'assurer leurs déplacements, réalisées par un opérateur qui exerce sur le chariot les efforts de poussée ou de traction, voire de rotation, nécessaires.

Dans certaines conditions, la commande du déplacement d'un tel chariot impose de la part de la personne qui le manoeuvre un effort initial important et conduit à des postures de travail incommodes, les manipulations ultérieures de ce chariot étant délicates et n'étant pas toujours d'une parfaite fiabilité, l'opérateur ayant à exercer une action notable sur le chariot si la charge à transporter par celui-ci est elle-même importante.

Il est connu dans l'art antérieur, le document FR2661881, il décrit un dispositif de motorisation d'assistance par chariot de charges légères à un essieu ou deux essieux. La motricité temporaire est effectuée par un bloc motorisé comprenant le stockage de l'énergie électrique par accumulateur alimentant à l'aide d'une commande, le motoréducteur et un électroaimant susceptible d'agir sur l'embrayage, qui entraîne l'arbre de sortie par l'intermédiaire d'un train d'engrenage.

Nous connaissons également le document US6000486 qui divulgue un chariot de livraison de médicaments de forme rectangulaire. Ce chariot comprend une unité de conduite et un bloc motorisé comprenant une roue montée sur un dispositif à bascule de façon à être soit en position rétractée, soit en position active pour déplacer le chariot. Des roues pivotantes par l'intermédiaires de chapes sont montées aux quatre angles du chariot. La manoeuvrabilité aisée de ce chariot comportant quatre roues pivotantes éloignées de la roue motrice motorisée ne semble pas acquise.

L'invention est relative à un chariot présentoir motorisé, qui évite ces inconvénients, tel que défini à la revendication 1.

Selon d'autres caractéristiques avantageuses, le motoréducteur est réversible pour permettre le déplacement du chariot aussi bien vers l'avant que vers l'arrière, et est alimenté par une source de tension électrique autonome, du genre batterie d'accumulateurs ou similaire, portée par le réceptacle.

La roue motrice d'entraînement du chariot est montée au centre du réceptacle de telle sorte que le chariot puisse présenter un rayon de braquage pratiquement nul autour de l'axe vertical passant par le centre de cette roue.

Grâce à ces dispositions, en l'absence de tension électrique, l'embrayage électromagnétique découple le motoréducteur vis-à-vis de la roue motrice, permettant à l'opérateur d'exercer si nécessaire une action manuelle pour tirer ou pousser le chariot.

A l'inverse, lorsque le motoréducteur est mis sous tension par actionnement de son bouton de commande et que la roue motrice est entraînée par ce motoréducteur via l'embrayage électromagnétique, le chariot peut être aisément déplacé sur le sol en ne demandant à l'opérateur qu'un effort résiduel, celui-ci se bornant à guider le déplacement du chariot avec orientation commandée par les roues de guidage, ce qui améliore de manière essentielle les conditions de travail.

Dans un mode de réalisation préféré, les roues de guidage et la roue motrice comportent chacune un bandage extérieur en caoutchouc ou matériau similaire pour garantir l'adhérence au sol et le déplacement du chariot.

D'autres caractéristiques d'un chariot présentoir de pièces établi conformément à l'invention, apparaîtront encore à travers la description qui suit d'un exemple de réalisation, donné à titre indicatif et non limitatif, en référence aux dessins annexés sur lesquels :
- La Figure 1 est une vue en perspective du chariot présentoir considéré, avec son réceptacle illustré en traits mixtes et ses moyens de commande, conformes à l'invention, en traits pleins.
- La Figure 2 est une vue, à plus grande échelle, du motoréducteur, de son embrayage électromagnétique et de la roue motrice d'entraînement du chariot.

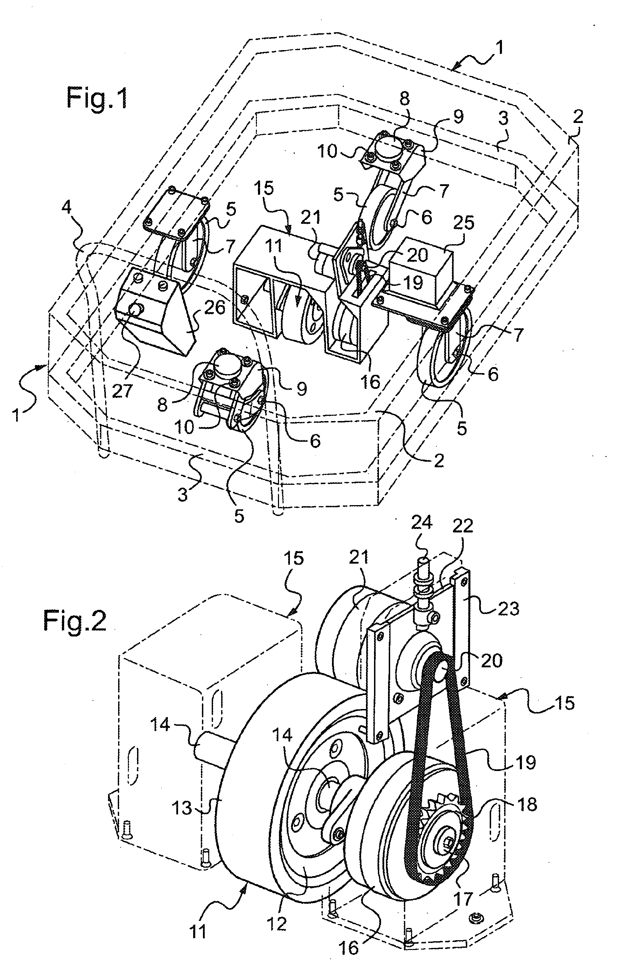

Sur la Figure 1, le chariot présentoir considéré est désigné dans son ensemble sous la référence 1, ce chariot comportant un réceptacle 2 pour la mise en place de pièces ou charges diverses (non représentées), à transporter d'un endroit à un autre, notamment en vue de leur présentation sur un ou plusieurs postes d'approvisionnement prévus sur une ligne de montage.

Le réceptacle 2 comporte une base horizontale 3 à sa partie inférieure et sur un de ses côtés, une poignée de manoeuvre 4, permettant un opérateur d'assurer le déplacement du chariot sur le sol au moyen de roues de guidage 5, prévues sous la base 3 et portées par celle-ci, ces roues, au nombre de quatre, étant de préférence disposées en losange, avec deux roues latérales voisines des côtés du chariot et deux roues axiales disposées vers l'avant et l'arrière de celui-ci par rapport à la poignée 4.

Chacune des deux roues 5 montées dans l'axe du réceptacle 2 du chariot 1, comporte un axe horizontal de rotation 6, supporté par une chape 7, elle-même solidarisée d'un axe vertical 8 susceptible de tourillonner dans une platine de support 9, fixée sous la base 3 par des écrous d'immobilisation 10.

Ce montage des deux roues axiales 5 qui leur permet de pivoter autour de l'axe vertical 8 de leur chape 7, autorise ainsi aisément les changements de direction du chariot au cours de ses déplacements. En revanche, les chapes de support des deux autres roues de guidage latérales sont fixes.

Conformément à l'invention, le réceptacle 2 du chariot 1 comporte une cinquième roue 11 qui, à la différence des roues de guidage 5, est une roue motrice, celle-ci étant disposée sensiblement au centre du réceptacle 2 afin de lui conférer un rayon de braquage pratiquement nul autour de l'axe vertical passant par le centre de cette roues lors des évolutions du chariot et en particulier de ses changements de direction vers la droite ou vers la gauche.

La roue motrice 11, représentée à plus grande échelle sur la Figure 2, comporte avantageusement un moyeu métallique 12 et un bandage externe 13, en caoutchouc ou matériau similaire, permettant d'assurer entre le sol et la roue un coefficient de frottement approprié pour produire le déplacement assuré du chariot lorsque la roue est entraînée. Un tel bandage en caoutchouc peut être également prévu sur les roues de guidage 5.

La roue motrice 11 est portée par un axe horizontal 14, lui-même assujetti sur un bâti de support 15 fixé à la base 3 du réceptacle 2, ce bâti 15 étant illustré en traits pleins sur la Figure 1 et pour partie en traits mixtes sur la Figure 2 afin de ne pas surcharger cette dernière.

Sur l'axe 14, est monté un embrayage électromagnétique 16, permettant, de façon en elle-même connue, d'assurer l'entraînement de la roue de la façon décrite ci-après, ou au contraire, de libérer celle-ci vis-à-vis de ses moyens de commande en rotation.

Sur l'arbre de sortie 17 de l'embrayage 16, est monté un pignon droit 18 dont les dents sont prévues pour coopérer avec des crans (non représentés) d'une courroie de transmission 19 en prise avec l'arbre de sortie 20 d'un motoréducteur réversible 21, également porté par le bâti 15 au-dessus de la roue motrice 11.

Avantageusement, le carter du moteur 21 est solidaire d'une plaque 22, apte à se déplacer légèrement dans un plan vertical sur une glissière fixe 23 sous l'effet d'un organe de réglage à vis 24, afin d'ajuster la tension de la courroie crantée d'entraînement 19.

Le motoréducteur réversible 21 reçoit l'énergie électrique nécessaire à son fonctionnement à partir d'une batterie d'accumulateurs 25 (visible sur la Figure 1, ou de toute autre source d'alimentation autonome, cette batterie étant également portée par le bâti 15.

Sur le réceptacle 2, au voisinage de la poignée de manoeuvre 4, est enfin monté un boîtier 26, muni d'un bouton de commande 27 permettant à l'opérateur manoeuvrant le chariot, de mettre le motoréducteur 21 sous tension et, via l'embrayage électromagnétique 16, d'actionner la roue d'entraînement 11 dans la direction choisie, vers l'avant ou vers l'arrière selon le sens de la rotation du motoréducteur, aussi bien que de provoquer, à l'inverse, l'arrêt immédiat de l'entraînement en coupant cette alimentation.

L'invention propose ainsi un chariot présentoir de pièces pour l'approvisionnement de lignes de fabrication, de conception très simple, présentant une maniabilité largement améliorée à l'égard des solutions classiques non motorisées, la réalisation envisagée permettant d'assurer tous les déplacements nécessaires de ce chariot sans qu'il soit indispensable de bénéficier d'une grande surface en raison de son rayon de braquage quasi nul et en n'exigeant de l'opérateur qu'un effort manuel de poussée ou de traction, sans qu'il soit amené à adopter des positions ergonomiquement mauvaises, pénalisant ses conditions de travail.

Bien entendu, il va de soi que l'invention ne se limite pas à l'exemple de réalisation plus spécialement décrit et représenté en référence au dessin annexé ; elle en embrasse au contraire toutes les variantes définies dans les revendications ci-jointes.

## Revendications

1. Chariot présentoir de pièces pour l'approvisionnement de lignes de fabrication, comprenant un réceptacle (2) pour la réception et le support des pièces à transporter, muni de roues de guidage (5) non motrices, propres à assurer son libre déplacement sur le sol suite à un effort transversal appliqué au réceptacle, une roue motrice d'entraînement (11) montée au centre du réceptacle (2), et au centre de quatre roues de guidage (5) et portée par un axe horizontal (14), lui-même assujetti sur un bâti de support (15) fixé à la base (3) du réceptacle (2), **caractérisé en ce que** la roue motrice d'entraînement est associée à un embrayage électromagnétique de liaison (16), et que sur un arbre de sortie 17 de l'embrayage 16 est monté un pignon droit 18 dont les dents sont prévues pour coopérer avec des crans d'une courroie de transmission 19 en prise avec l'arbre de sortie 20 d'un motoréducteur électrique réversible 21, également porté par le bâti 15 au-dessus de la roue motrice 11, et actionné par un bouton de commande (27), les quatre roues de guidage (5) étant disposées en losange sur le réceptacle (2) de telle sorte que le chariot puisse présenter un rayon de braquage pratiquement nul autour de l'axe vertical passant par le centre de cette roue motrice d'entraînement (11), et **en ce que** les deux roues latérales montées dans des chapes fixes sont placées sur les cotés du chariot et deux roues axiales montées dans des chapes pivotantes (7) sont disposées vers l'avant et l'arrière du chariot par rapport à la poignée (4).

2. Chariot selon la revendication 1 **caractérisé en ce qu'**il est alimenté par une source de tension électrique autonome (25), du genre batterie d'accumulateurs ou similaire, portée par le réceptacle (2).

3. Chariot selon l'une quelconque des revendications 1 à 2, **caractérisé en ce que** les roues de guidage (5) et motrice (11) comportent chacune un bandage extérieur (13) en caoutchouc ou matériau similaire pour faciliter le déplacement du chariot.

## Claims

1. A parts display trolley for supplying production lines, comprising a receptacle (2) for receiving and carrying parts to be transported, equipped with non-driving guide wheels (5) for ensuring free movement of said trolley on the ground as a result of a transverse strain applied to the receptacle, a main driving wheel (11) mounted in the centre of the receptacle (2) and in the centre of four guide wheels (5) and carried by a horizontal axis (14), in turn fastened to a support frame (15) fixed to the base (3) of the receptacle (2), **characterised in that** the main driving wheel is associated with an electromagnetic connecting clutch (16), and **in that** on an output shaft (17) of the clutch (16) is mounted a spur pinion (18), the teeth of which gear are provided so as to cooperate with notches in a transmission belt (19) engaged with the output shaft (20) of a reversible electric gear motor (21) also carried by the frame (15) above the driving wheel (11), and actuated by a control button (27), the four guide wheels (5) being arranged on the receptacle (2) in a diamond pattern in such a way that the trolley can have a steering lock radius of virtually zero about the vertical axis passing through the centre of said main driving wheel (11), and **in that** the two lateral wheels mounted in rigid forks are positioned on the sides of the trolley and two axial wheels mounted in swivel forks (7) are arranged to the front and rear of the trolley relative to the handle (4).

2. The trolley according to claim 1, **characterised in that** it is powered by an autonomous voltage source (25) of the storage battery type or the like, and carried by the receptacle (2).

3. The trolley according to any of claim 1 or 2, **characterised in that** the guide wheels (5) and driving wheel (11) each comprise an outer tyre (13) made of rubber or a similar material to facilitate movement of the trolley.

## Patentansprüche

1. Wagen zur Kommissionierung von Teilen zur Versorgung von Produktionslinien, enthaltend einen Auffangbehälter (2) für die Aufnahme und Halterung der zu transportierenden Teile, der mit Führungslaufrädern (5) versehen ist, die dafür vorgesehen sind, seine freie Bewegung auf dem Boden in Folge einer auf den Auffangbehälter ausgeübten quergerichteten Kraft sicherzustellen, ein Antriebsrad (11), das in der Mitte des Auffangbehälters (2) und in der Mitte von vier Führungsrädern (5) gelagert ist und von einer horizontalen Achse (14) getragen wird, die ihrerseits an einem Trägergestell (15) befestigt ist, das an dem Bodenteil (3) des Auffangbehälters (2) befestigt ist, **dadurch gekennzeichnet, dass** das Antriebsrad mit einer elektromagnetischen Verbindungskupplung (16) verbunden ist und dass an einer Abtriebswelle (17) der Kupplung (16) ein Stirnrad (18) montiert ist, dessen Zähne für das Zusammenwirken mit Einkerbungen eines Antriebsriemens (19) vorgesehen sind, der mit der Abtriebswelle (20) eines umkehrbaren elektrischen Getriebemotors (21) im Eingriff ist, der auch von dem Gestell (15) oberhalb des Antriebsrads (11) getragen wird und durch einen Betätigungsknopf (27) betätigt wird, wobei die vier Führungsräder (5) rautenförmig an dem Auffangbehälter (2) angeordnet sind, derart, dass der Wagen einen Einschlagradius um die vertikale Achse aufweisen kann, der praktisch gleich Null ist, wobei die Achse die Mitte dieses Antriebsrads (11) durchläuft, und dass die zwei seitlichen Räder, die in ortsfesten Abdeckungen gelagert sind, an den Seiten des Wagens angeordnet sind und zwei axiale Räder, die in schwenkbaren Abdeckungen (7) gelagert sind, relativ zu dem Griff (4) in Richtung des vorderen Teils und in Richtung des hinteren Teils des Wagens angeordnet sind.

2. Wagen nach Anspruch 1, **dadurch gekennzeichnet, dass** er durch eine autonome elektrische Spannungsquelle (25), vom Typ Akkumulator oder dergleichen, gespeist wird, die vom Auffangbehälter (2) getragen wird.

3. Wagen nach einem der Ansprüche 1 bis 2, **dadurch gekennzeichnet, dass** die Führungsräder (5) und das Antriebsrad (11) jeweils eine äußere Bereifung (13) aus Gummi oder ähnlichem Material aufweisen, um die Bewegung des Wagens zu erleichtern.
